# EUROPÄISCHE PATENTSCHRIFT

(11) **EP 2 106 005 B1**
(45) Veröffentlichungstag und Bekanntmachung des Hinweises auf die Patenterteilung: **09.05.2018**
(21) Anmeldenummer: 09003998.3
(22) Anmeldetag: 20.03.2009
(51) Int. Cl.: H02G 3/18

(54) **Versorgungseinheit für Unterfluranwendung**
Supply unit for under-floor usage
Unité d'alimentation pour application sous plancher

(30) Priorität: 26.03.2008 DE 102008015770; 26.03.2008 DE 202008004144 U
(43) Veröffentlichungstag der Anmeldung: 30.09.2009
(73) Patentinhaber: Tehalit GmbH, 67716 Heltersberg (DE)
(72) Erfinder: Limbach, Frank, 53560 Vettelschoß (DE)
(74) Vertreter: Nuss, Laurent

(56) Entgegenhaltungen:
- EP-A1- 1 355 399
- EP-A2- 1 811 624
- DE-A1- 3 403 053
- DE-A1-102004 059 815
- DE-U- 7 048 119
- US-A- 2 930 504
- US-A- 4 634 015
- US-A1- 2006 032 654

## Beschreibung

Die Erfindung betrifft eine Versorgungseinheit für Unterfluranwendungen, die mit einem Rastleiterrahmen versehen sind, der mit mindestens einer Schlitzreihe an zwei gegenüberliegenden Seiten ausgestattet ist, wobei an dem Rastleiter Gerätebecher in unterschiedlichen Einsetztiefen festlegbar sind.

Bei bekannten Versorgungseinheiten im Unterflurbereich wird das Befestigen von Gerätebechern in gewünschte Tiefe dadurch realisiert, dass ein zusätzlicher Zwischenrahmen unter dem Gerätebecher eingesetzt werden kann, an dem der Gerätebecher dann befestigt wird. Durch unterschiedlich hohe Zwischenrahmen kann die gewünschte Tiefe für den Gerätebecher ausgewählt werden. Es müssen daher mehrere unterschiedliche Zwischenrahmen bevorratet werden, was nachteilig ist. Des Weiteren ist die Montage eines solchen Zwischenrahmens sehr aufwendig, da dazu die Gerätebecheraufnahme vom Klappdeckel abgeschraubt werden muss, um den Zwischenrahmen anzuschrauben.

Die EP1.811.624 zeigt eine zweiteilige Versorgungseinheit für Unterfluranwendungen, wobei beide Teile in der Gesamt-Einbauhöhe justierbar sind. Der obere Teil der Versorgungseinheit weist Schlitzreihen auf, die zur Befestigung von Einbaugeräten (Schalter, Steckdosen etc.) vorgesehen sind. Der untere Teil der Versorgungseinheit wird über Schrauben mit dem oberen Teil verbunden und höhenjustiert

Aufgabe der Erfindung ist es, eine Gerätebecherbefestigung zu entwickeln, die eine Befestigung des Gerätebechers abweichend von der Standardtiefe in einer gewünschten Tiefe in einfacher Weise ermöglicht, wobei das Vorsehen von unterschiedlichen Einsetztiefen durch eine Montage mit geringem Zeitaufwand möglich sein soll.

Diese Aufgabe wird durch die Vorrichtung mit den Merkmalen des Anspruchs 1 gelöst. Vorteilhafte Weiterbildungen sind in den Unteransprüchen aufgeführt.

Erfindungsgemäß wird an einer Versorgungseinheit für Unterfluranwendungen ein Rastleiterrahmen vorgesehen. Dies bedeutet, die aus dem Stand der Technik bekannten Rastleiter werden in Form eines Rahmens mit dem Klappdeckel verbunden. Der Rastleiterrahmen weist mindestens je eine Schlitzreihe an zwei gegenüberliegenden Seiten auf, vorzugsweise sind drei Paar Schlitzreihen vorgesehen, so dass drei Gerätebecher in unterschiedlichen Schlitzen der Schlitzreihe eingesetzt und so in verschiedenen Einsetztiefen lösbar befestigt werden können. Dieser in der Versorgungseinheit integrierte Rastleiterrahmen zeigt wie bei bekannten Gerätebecheraufnahmen Schlitzreihen, die Einsetztiefen für Gerätebecher stufenweise bis 30 mm ermöglichen.

Um einen Gerätebecher in einer noch tiefer abgesenkten Position befestigen zu können, wird zumindest ein Zusatzrahmen als Rastleiterverlängerung vorgesehen. Dieser Zusatzrahmen ist in gleicher Weise wie der Rastleiterrahmen mit je mindestens einer Schlitzreihe an zwei gegenüberliegenden Seiten ausgestattet, vorzugsweise sind drei Paar Schlitzreihen vorgesehen. Des Weiteren besitzt der Zusatzrahmen Mittel, um den Zusatzrahmen mit dem Rastleiterrahmen lösbar zu verbinden. Diese Verbindungsmittel am Zusatzrahmen sind bevorzugt Klemmmittel. Wird also eine größere Absenktiefe gewünscht, kann ein solcher Zusatzrahmen von unten auf den Rastleiterrahmen aufgesteckt werden, der hierfür entsprechende Ausnehmungen besitzt, in welche die Klemmmittel einrasten können. Eine solche Montage ist einfach und ohne großen Zeitaufwand möglich. Auf die gleiche Weise kann auch als weitere Rastleiterrahmenverlängerung von unten an den mit dem Rastleiterrahmen verbundenen Zusatzrahmen ein zweiter Zusatzrahmen angesetzt werden.

Ein erfindungsgemäßer Zusatzrahmen hat einen rahmenartigen Grundkörper, der einen geschlossenen Rahmen bildet. Dieser Zusatzrahmen kann einstückig ausgebildet sein oder aus mehreren Rahmenteilen zusammengesetzt sein, die in zusammengesetzter Form ebenfalls einen geschlossenen Rahmen bilden. Der Grundkörper des Zusatzrahmens ist an dem Grundkörper des Rastleiterrahmens angepasst, so dass im verbundenen Zustand von Rastleiterrahmen und Zusatzrahmen ein einheitliches Rahmengebilde entsteht. Die Verbindung von Rastleiterrahmen und Zusatzrahmen kann mittels bekannter Verbindungsmöglichkeiten erfolgen, bevorzugt wird eine Klemmverbindung. Für eine solche Klemmverbindung werden am Rastleiterrahmen und am Zusatzrahmen Klemmelemente vorgesehen und zwar in einer solchen Weise, dass bei Verbindung des Rastleiterrahmens mit dem Zusatzrahmen die Klemmelemente in senkrechter Ausrichtung zueinander abgeordnet sind und somit eine Klemmverbindung in senkrechter Richtung herstellbar und lösbar ist.

Bei einer Ausführungsform der Versorgungseinheit werden am Rastleiterrahmen Ausnehmungen vorgesehen, zumindest an den Seiten, an denen die Schlitzreihen angeordnet sind. Zusätzlich können auch Ausnehmungen an den zwei weiteren Seiten des Rastleiterrahmens als zusätzliche Sicherung vorgesehen sein. Am Zusatzrahmen sind in entsprechender Ausrichtung zu den Ausnehmungen des Rastleiterrahmens Klemmarme angeformt. Diese Klemmarme ragen nach oben von der Oberseite des Zusatzrahmens ab und verrasten bei Verbindungsbildung in die Ausnehmungen des Rastleiterrahmens ein. So ausgestattete Rastleiterrahmen und Zusatzrahmen lassen sich in einfacher Weise verbinden, indem der Zusatzrahmen mit der Oberseite an die Unterseite des Rastleiterrahmens herangeführt wird, die nach oben abragenden Klemmarme in die Ausnehmungen des Rastleiterrahmens eingeführt werden und dort sicher verrasten.

In einer alternativen Ausführungsform besitzt der Zusatzrahmen Ausnehmungen und am Rastleiterrahmen sind nach unten abragende Klemmarme vorgesehen.

In einer weiteren Ausführungsform ist der Zusatzrahmen aus mehreren Teilen zusammengesetzt, vorzugsweise aus zwei U-förmigen Rahmenteilen. In zusammengesetzter Form ergibt sich wieder ein geschlossener Rahmen, der in vorbeschriebener Weise mit dem Rastleiterrahmen verbunden werden kann. Bei dem U-förmigen Rahmenteilen werden die Schlitzreihen an der Basisseite der U-förmigen Rahmenteile vorgesehen. Die beiden Seiten, die die Schenkel des U-förmigen Rahmenteils bilden, sind an den Stirnseiten mit Rastelementen ausgestattet, die eine Verbindung der zwei Rahmenteile zu einem geschlossenen Rahmen ermöglichen. Neben Rastmitteln können auch andere Verbindungsmittel vorgesehen werden. Bevorzugt wird jedoch aufgrund der einfachen Montage und der einfachen Herstellung durch Spritzguss die Anordnung von Rastelementen.

Die beiden U-förmigen Rahmenteile sind in einer bevorzugten Ausführungsform gleich gestaltet, wobei endseitig an dem ersten Schenkel ein die Stirnseite des Schenkels überragender Rastarm angeformt ist und an dem Ende des anderen Schenkels eine von der Stirnseite des Schenkels ausgehende Rastausnehmung eingeformt ist. Diese Rastausnehmung wirkt bei dem Zusammenstecken der beiden U-förmigen Rahmenteile mit einem Rastarm zusammen, der an einem ersten Schenkel am zweiten U-förmigen Rahmenteil angeformt ist, indem es den Rastarm dieses zweiten U-förmigen Rahmenteils aufnimmt. In gleicher Weise wird der Rastarm des ersten U-förmigen Rahmenteils in einer Rastausnehmung des zweiten U-förmigen Rahmenteils aufgenommen.

Unabhängig davon, ob ein einstückiger Zusatzrahmen oder ein Zusatzrahmen aus mehreren Rahmenteilen verwendet wird, kann mit diesem Zusatzrahmen und dem an der Versorgungseinheit integrierten Rastleiterrahmen ein einheitlicher geschlossener Rahmen für die Installation der Gerätebecher erzeugt werden. Ein solcher geschlossenen Rahmens ist sehr stabil. Auf diese Weise können auch tief eingerastete Gerätebecher sicher gehalten werden und rasten nicht beim Einstecken oder Entfernen von Installationsgeräten aus.

Die Erfindung ist des Weiteren anhand eines Ausführungsbeispiels in den Zeichnungen dargestellt und wird im Folgenden beschrieben. Es zeigen:
- Fig. 1: eine perspektivische Ansicht eines Zusatzrahmens in zusammengesetzter Form,
- Fig. 2: den Zusatzrahmen gemäß Fig. 1 in Einzelteilen,
- Fig. 3: eine perspektivische Ansicht einer erfindungsgemäßen Versorgungseinheit.

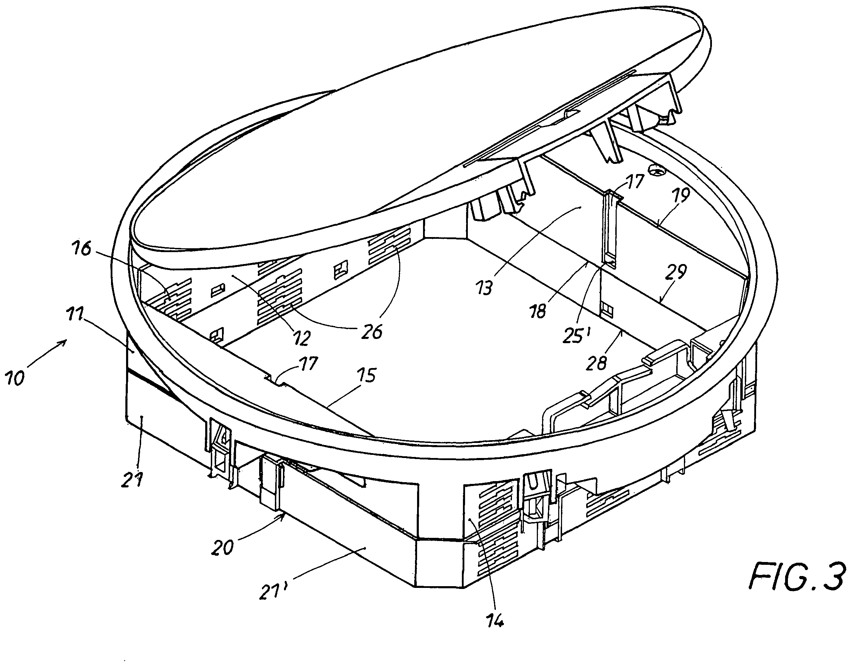

Fig. 3 zeigt eine erfindungsgemäße Versorgungseinheit 10 für Unterfluranwendungen mit einem Rastleiterrahmen 11. Dieser Rastleiterrahmen 11 besitzt einen geschlossenen Grundkörper mit den Rahmenseiten 12, 13, 14, 15. An den Rahmenseiten 12 und 14 sind gegenüberliegend Schlitzreihen 16 vorgesehen. Die Schlitze der Schlitzreihen 16 dienen zur lösbaren Befestigung von Gerätebechern, die in der Zeichnung der besseren Übersicht halber nicht dargestellt sind. Diese Gerätebecher können in gewünschter Höhe in der Versorgungseinheit 10 eingesetzt und in Schlitzen der Schlitzreihe 16 an zwei gegenüberliegenden Seiten 12, 14 des Rastleiterrahmens 11 verrastet werden. Dazu besitzt der Gerätebecher endseitig entsprechende Rastnippel.

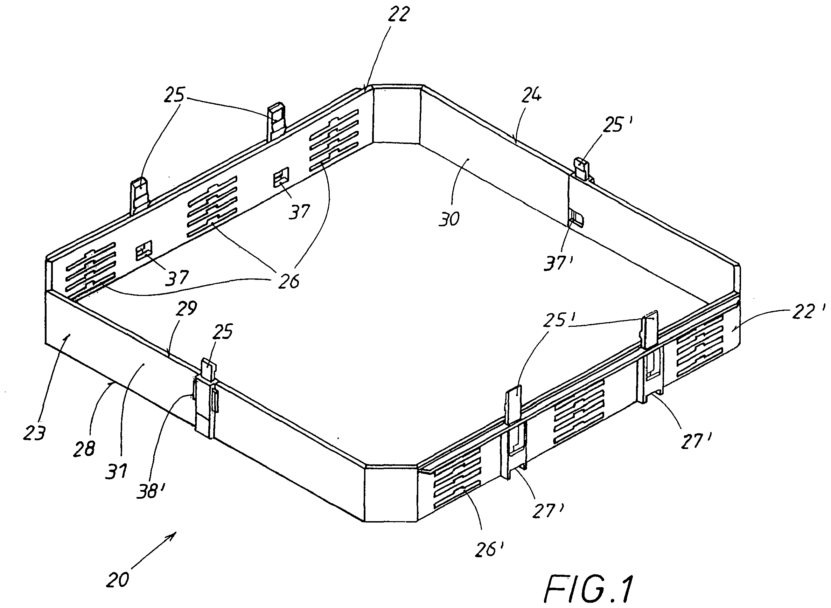

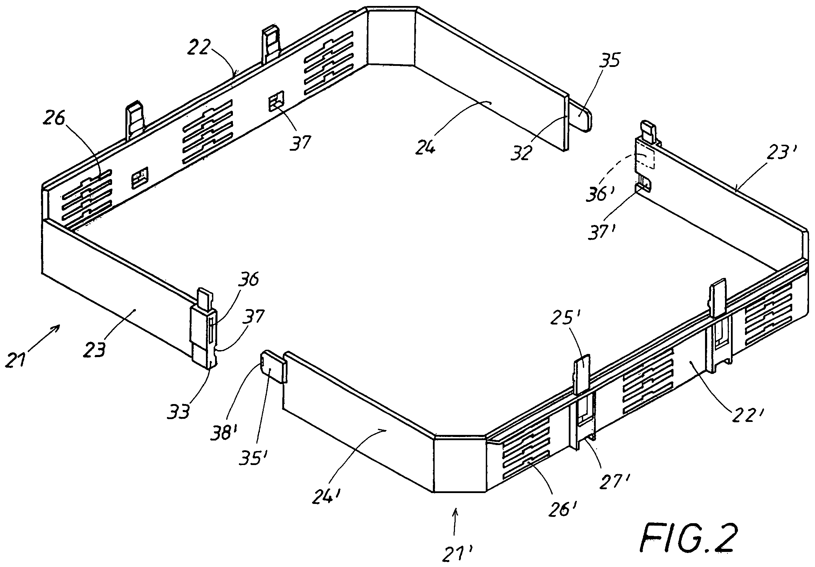

Unterhalb des Rastleiterrahmens 11 befindet sich ein Zusatzrahmen 20, der besser in den Fig. 1 und 2 dargestellt ist. Dieser Zusatzrahmen 20 besteht aus zwei U-förmig verlaufenden Rahmenteilen 21, 21'. An der Basisseite 22, 22' der U-förmigen Rahmenteile 21, 21' sind Schlitzreihen 26, 26' vorgesehen. Diese sind so angeordnet, dass immer eine Schlitzreihe 26 an der Basisseite 22 mit einer Schlitzreihe 26' der Basisseite 22' gegenüberliegend ausgerichtet ist. Des Weiteren stellt jede Schlitzreihe 26, 26' bei einer zusammengesetzten Versorgungseinheit 10 eine Verlängerung der Schlitzreihen 16 des Rastleiterrahmens 11 dar, siehe Fig.3.

Die Verbindung des geschlossenen Zusatzrahmens 20, wie er in Fig. 1 gezeigt ist, mit dem Rastleiterrahmen 11 wird über eine Klemmverbindung erzielt. Hierzu sind am Zusatzrahmen 20 von der Oberseite 29 des Zusatzrahmens 20 nach oben abragende Klemmarme 25, 25' vorgesehen. Wie der Fig. 1 zu entnehmen ist, sind jeweils zwei Klemmarme 25 bzw. 25' an den Basisseiten 22, 22' angeformt. Diese sind zwischen den Schlitzreihen 26 bzw. 26' angeordnet und beeinträchtigen auf diese Weise die Montagemöglichkeit für die Gerätebecher nicht. Des Weiteren ist in diesem Ausführungsbeispiel je ein Klemmarm 25, 25' im Bereich der Verbindungsstelle zwischen den beiden Rahmenteilen 21, 21' vorgesehen. Selbstverständlich können auch an diesen beiden Seiten des Zusatzrahmens 20 weitere Klemmarme 25, 25' angeformt sein.

Zur Verbindung des Zusatzrahmens 20 mit dem Rastleiterrahmen 11 der Versorgungseinheit 10 wird der Zusatzrahmen von unten her an den Rastleiterrahmen 11 herangeführt und der Rastleiterrahmen 11 von oben her auf den Zusatzrahmen aufgesetzt oder der Zusatzrahmen 20 von unten her auf den Rastleiterrahmen 11 aufgesteckt, wobei die Klemmarme 25, 25' in Ausnehmungen 17 des Rastleiterrahmens 11 eingreifen, bis die endseitigen Nasen der Rastarme 25, 25' die jeweilige Ausnehmung 17 hintergreifen. In der Fig. 3 ist ein Zusatzrahmen 20 am Rastleiterrahmen 11 montiert. An der Rahmenseite 13 ist deutlich die Ausnehmung 17 zu sehen und ein Teil des Rastarms 25', der von unten her in die Ausnehmung 17 eingreift und mit seiner endseitigen Nase an einer Wand verhakt, die die Ausnehmung 17 umgibt. In gleicher Weise wird eine Klemmverbindung an den weiteren Rahmenseiten 12, 14 und 15 erzielt. In dieser montierten Form des Zusatzrahmens 20 ist eine Montage eines Gerätebechers in einer größeren Einsatztiefe möglich, da die Schlitzreihen 16 des Rastleiterrahmens 11 durch die Schlitzreihen 26 des Zusatzrahmens 26 nach unten verlängert sind.

Der Zusatzrahmen 20 kann ein einstückiger Rahmen sein oder, wie insbesondere aus Fig. 2 zu ersehen, aus zwei U-förmigen Rahmenteilen 21, 21', die über eine Rastverbindung miteinander verbunden werden. Dazu wird am Schenkel 23 des Rahmenteils 21 eine Ausnehmung 36 vorgesehen. Diese Ausnehmung 36 geht von der Stirnseite 33 des Schenkels 23 aus und verläuft in Richtung des Schenkels 23. Dazu weist der Schenkel 23 in diesem Bereich eine größere Wandstärke auf, wobei die Wanddickenverstärkung auf der Außenseite des Schenkels 23 vorgesehen ist, so dass die Ausnehmung 36, die von der Stirnseite 33 des Schenkels 23 ausgeht, durch die Wanddickenverstärkung führt und benachbart zur Wandung des Schenkels 23 endet. In diese Ausnehmung 36 kann ein Rastarm 35' des Schenkels 24' des Rahmenteils 21' zur Verbindungsbildung eingeschoben werden, bis die endseitig an dem Rastarm 35' vorgesehene Rastnase 38' die Ausnehmung 36 passiert hat und sich am Ausgang der Ausnehmung 36 verhakt, wie dies in Fig. 1 zu sehen ist. In gleicher Weise wird gleichzeitig die Verbindung zwischen dem Rastarm 35, angeformt am Schenkel 24 des Rahmenteils 21 mit der Rastausnehmung 36', vorgesehen am Schenkel 23' des Rahmenteils 21' erzielt. Beide Rastarme 35, 35' sind dazu an der Außenseite der Schenkel 24, 24' angeformt.

Die Ausnehmung 36, 36' kann auch als Sackloch gestaltet sein, wobei zur Verrasterung der Rastnasen 38, 38' entsprechende Rastnuten innerhalb einer solchen Ausnehmung vorgesehen werden.

Wie der Fig. 2 zu entnehmen ist, sind beide Rahmenteile 21, 21' gleichgestaltet. Es ist selbstverständlich auch möglich, Rahmenteile nur mit Rastarmen auszustatten und korrespondierende Rahmenteile nur mit Rastausnehmungen zu versehen. Auch sind andere Verbindungsmittel zwischen den Rahmenteilen möglich. Eine Rastverbindung stellt jedoch eine einfache Verbindungsmöglichkeit dar, die mit geringem Zeitaufwand erzielbar ist. Des Weiteren lassen sich die Rastelemente beim Herstellen der Rahmenteile 21, 21' im Kunststoff-Spritzgussverfahren leicht mit anformen.

Wie insbesondere der Fig. 2 zu entnehmen, werden die Rastverbindungen zwischen dem Rastarm 35 und der Rastausnehmung 36' bzw. dem Rastarm 35' und der Rastausnehmung 36 an den Außenseiten 31 des Zusatzrahmens 20 geschlossen, so dass die Verbindungen die Innenflächen des Zusatzrahmens und damit den Einbauraum der Versorgungseinheit 10 nicht beeinflussen. Kein Verbindungsteil, d.h. kein Klemmelement 35, 35', 36, 36' ragt in den Innenraum des Zusatzrahmens 20 in montierter Form, wie dies der Fig. 1 zu entnehmen ist. Der Zusatzrahmen 20 hat eine glatte Innenseite 30, die ausreichend Raum für das Einsetzen der Gerätebecher gewährleistet.

Die in Fig. 3 gezeigte Versorgungseinheit 10 mit Rastleiterrahmen 11 und Zusatzrahmen 20 kann durch einen weiteren Zusatzrahmen 20 aufgestockt werden, so dass eine weitere Rastleiterverlängerung erzielt wird. Hierzu wird ein weiterer, gleichgestalteter Zusatzrahmen 20 von unten her an den bereits montierten Zusatzrahmen 20 angesetzt und eine Klemmverbindung zwischen den Klemmarmen 25 des unteren Zusatzrahmens mit Ausnehmungen 27, 27' am oberen Zusatzrahmen 20 erzielt. Die Ausnehmungen sind in den Fig. 1 und 2 dargestellt. Sie sind an der Außenseite 31 des Zusatzrahmens 20 unterhalb der Klemmarme 25 angeordnet.

### Bezugszeichenliste:

- 10: Versorgungseinheit
- 11: Rastleiterrahmen
- 12: Rahmenseite
- 13: Rahmenseite
- 14: Rahmenseite
- 15: Rahmenseite
- 16: Schlitzreihe
- 17: Ausnehmung
- 18: Unterseite
- 19: Oberseite
- 20: Zusatzrahmen
- 21, 21': Rahmenteil
- 22, 22': Basisseite
- 23, 23': Schenkel
- 24, 24': Schenkel
- 25, 25': Klemmarm
- 26, 26': Schlitzreihe
- 27, 27': Ausnehmung
- 28: Unterseite
- 29: Oberseite
- 30: Innenseite
- 31: Außenseite
- 32: Stirnseite
- 33: Stirnseite
- 35,35': Rastarm
- 36.36': Rastausnehmung
- 37, 37': Öffnung
- 38': Rastnase

## Patentansprüche

1. Versorgungseinheit für Unterfluranwendungen, mit einem Rastleiterrahmen (11) mit mindestens je einer Schlitzreihe (16) an zwei gegenüberliegenden Seiten (12, 14) des Rastleiterrahmens (11), wobei an dem Rastleiterrahmen (11) Gerätebecher in unterschiedlichen Einsetztiefen einsetzbar sind,
**dadurch gekennzeichnet,**
**dass** zumindest ein Zusatzrahmen (20) als Rastleiterrahmenverlängerung vorgesehen ist, der in gleicher Weise wie der Rastleiterrahmen (11) mit je mindestens einer Schlitzreihe (26) an zwei gegenüberliegenden Seiten ausgestattet ist, wobei der Zusatzrahmen (20) lösbar mit den Rastleiterrahmen (11) verbindbar ist, um die Einsetztiefe für einen Gerätebecher zu vergrößern.

2. Versorgungseinheit gemäß Anspruch 1, **dadurch gekennzeichnet, dass** der Zusatzrahmen (20) einen geschlossenen Rahmen darstellt, der über eine Klemmverbindung mit dem Rastleiterrahmen (11) verbindbar ist.

3. Versorgungseinheit gemäß Anspruch 2, **dadurch gekennzeichnet, dass** die Klemmverbindung zwischen den am Rastleiterrahmen (11) und dem der Zusatzrahmen (20) vorgesehenen Klemmelementen in senkrechter Richtung herstellbar oder lösbar ist.

4. Versorgungseinheit gemäß Anspruch 3, **dadurch gekennzeichnet, dass** am Rastleiterrahmen (11) Ausnehmungen (17) vorgesehen sind, in welche nach oben abragende Klemmarme (25) des Zusatzrahmens (20) einrasten.

5. Versorgungseinheit nach einem der Ansprüche 1 bis 4, **dadurch gekennzeichnet, dass** der Zusatzrahmen (20) einstückig ausgebildet ist.

6. Versorgungseinheit nach einem der Ansprüche 1 bis 4, **dadurch gekennzeichnet, dass** der Zusatzrahmen (20) aus zwei u-förmigen Rahmenteilen (21, 21'), vorzugsweise zwei gleich gestalteten Rahmenteilen (21, 21'), zusammengesetzt ist.

7. Versorgungseinheit gemäß Anspruch 6, **dadurch gekennzeichnet, dass** an der Basisseite (22, 22') der u-förmigen Rahmenteile (21, 21') die Schlitzreihen (26) vorgesehen sind und endseitig an den Schenkeln (23, 24; 23', 24') der u-förmigen Rahmenteile (21, 21') Rastelemente vorgesehen sind.

8. Versorgungseinheit gemäß Anspruch 7, **dadurch gekennzeichnet, dass** an dem Ende des Schenkels (24) des ersten u-förmigen Rahmenteils (21) ein die Stirnseite (32) des Schenkels (24) überragender Rastarm (35) und am anderen Schenkel (23) eine von der Stirnseite (33) ausgehende Rastausnehmung (36) vorgesehen ist, wobei der Rastarm (35) bzw. die Rastausnehmung (36) jeweils mit einer Rastausnehmung (36') bzw. einem Rastarm (35') an den Schenkeln (23', 24') des zweiten u-förmigen Rahmenteils (21') zusammenwirken.

9. Versorgungseinheit nach einem der Ansprüche 1 bis 8, **dadurch gekennzeichnet, dass** der Zusatzrahmen (20) mit weiteren Zusatzrahmen über eine Klemmverbindung verbindbar ist und dazu jeweils unterhalb der nach oben abragenden Klemmarme (25) jeweils eine nach unten geöffnete Ausnehmung (27) besitzt.

10. Versorgungseinheit nach einem der Ansprüche 2 bis 9, **dadurch gekennzeichnet, dass** die Rastelemente (35, 35'; 36, 36') und Klemmelemente (25, 27) an der Außenseite (31) des Zusatzrahmens (20) vorgesehen sind.

11. Versorgungseinheit nach einem der Ansprüche 1 bis 10, **dadurch gekennzeichnet, dass** jeweils drei Paar gegenüberliegende Schlitzreihen (16, 26) am Rastleiterrahmen (11) und am Zusatzrahmen (20) vorgesehen sind.

12. Versorgungseinheit gemäß Anspruch 7, **dadurch gekennzeichnet, dass** die Klemmelemente (25, 27) an der Basisseite (22) zwischen jeweils zwei benachbarten Schlitzreihen (26) angeordnet sind.

13. Versorgungseinheit nach einem der Ansprüche 1 bis 12, **dadurch gekennzeichnet, dass** der Zusatzrahmen (20) aus Kunststoff besteht und durch Spritzguss hergestellt ist.

## Claims

1. Supply unit for underfloor applications, comprising a latching conductor frame (11) with at least one slot row (16) on each of two opposite sides (12, 14) of the latching conductor frame (11), wherein device cups can be inserted to different insertion depths on the latching conductor frame (11),
**characterized**
**in that** at least one additional frame (20) is provided as a latching conductor frame extension and, in the same way as the latching conductor frame (11), is equipped with at least one slot row (26) on each of two opposite sides, wherein the additional frame (20) can be releasably connected to the latching conductor frame (11) in order to increase the insertion depth for a device cup.

2. Supply unit according to Claim 1, **characterized in that** the additional frame (20) constitutes a closed frame which can be connected to the latching conductor frame (11) via a clamping connection.

3. Supply unit according to Claim 2, **characterized in that** the clamping connection between the clamping elements provided on the latching conductor frame (11) and the additional frame (20) can be established or released in the vertical direction.

4. Supply unit according to Claim 3, **characterized in that** recesses (17) in which upwardly projecting clamping arms (25) of the additional frame (20) latch are provided on the latching conductor frame (11) .

5. Supply unit according to one of Claims 1 to 4, **characterized in that** the additional frame (20) is formed in one piece.

6. Supply unit according to one of Claims 1 to 4, **characterized in that** the additional frame (20) is composed of two u-shaped frame parts (21, 21'), preferably two identically designed frame parts (21, 21').

7. Supply unit according to Claim 6, **characterized in that** the slot rows (26) are provided on the base side (22, 22') of the u-shaped frame parts (21, 21') and latching elements are provided on the end side of the legs (23, 24; 23', 24') of the u-shaped frame parts (21, 21').

8. Supply unit according to Claim 7, **characterized in that** a latching arm (35) which projects beyond the end face (32) of the leg (24) is provided on the end of the leg (24) of the first u-shaped frame part (21) and a latching aperture (36) starting from the end face (33) is provided on the other leg (23), wherein the latching arm (35) and the latching aperture (36) respectively interact with a latching aperture (36') and a latching arm (35') on the legs (23', 24') of the second u-shaped frame part (21').

9. Supply unit according to one of Claims 1 to 8, **characterized in that** the additional frame (20) can be connected to further additional frames via a clamping connection and has for this purpose, in each case below the upwardly projecting clamping arms (25), a respective downwardly opened aperture (27).

10. Supply unit according to one of Claims 2 to 9, **characterized in that** the latching elements (35, 35'; 36, 36') and clamping elements (25, 27) are provided on the outer side (31) of the additional frame (20).

11. Supply unit according to one of Claims 1 to 10, **characterized in that** in each case three pairs of opposite slot rows (16, 26) are provided on the latching conductor frame (11) and on the additional frame (20).

12. Supply unit according to Claim 7, **characterized in that** the clamping elements (25, 27) on the base side (22) are arranged between in each case two adjacent slot rows (26).

13. Supply unit according to one of Claims 1 to 12, **characterized in that** the additional frame (20) consists of plastic and is produced by injection-moulding.

## Revendications

1. Unité d'approvisionnement pour applications sous plancher, avec un cadre à échelles encliquetables (11) doté d'au moins une rangée de fentes (16) sur chacun de deux côtés opposés (12, 14) du cadre à échelles encliquetables (11), sachant que des boîtes d'appareillage peuvent être installées à différentes profondeurs d'installation dans le cadre à échelles encliquetables (11), **caractérisée en ce qu'**il est prévu comme rallonge de cadre à échelles encliquetables au moins un cadre auxiliaire (20) qui est équipé de la même manière que le cadre à échelles encliquetables (11) d'au moins une rangée de fentes (26) sur chacun de deux côtés opposés, sachant que le cadre auxiliaire (20) peut être assemblé de manière amovible au cadre à échelles encliquetables (11) afin d'augmenter la profondeur d'installation pour une boîte d'appareillage.

2. Unité d'approvisionnement selon la revendication 1, **caractérisée en ce que** le cadre auxiliaire (20) constitue un cadre fermé qui peut être assemblé au cadre à échelles encliquetables (11) au moyen d'une liaison par serrage.

3. Unité d'approvisionnement selon la revendication 2, **caractérisée en ce que** la liaison par serrage entre les éléments de serrage prévus sur le cadre à échelles encliquetables (11) et sur le cadre auxiliaire (20) peut être réalisée ou défaite en direction verticale.

4. Unité d'approvisionnement selon la revendication 3, **caractérisée en ce que** des évidements (17) sont prévus sur le cadre à échelles encliquetables (11), dans lesquels s'enclenchent des bras de serrage (25) du cadre auxiliaire (20) qui font saillie vers le haut.

5. Unité d'approvisionnement selon l'une des revendications 1 à 4, **caractérisée en ce que** le cadre auxiliaire (20) est réalisé d'un seul tenant.

6. Unité d'approvisionnement selon l'une des revendications 1 à 4, **caractérisée en ce que** le cadre auxiliaire (20) est composé de deux parties de cadre (21, 21') en forme de U, de préférence de deux parties de cadre (21, 21') de configuration identique.

7. Unité d'approvisionnement selon la revendication 6, **caractérisée** en ce les rangées de fentes (26) sont prévues sur le côté de base (22, 22') des parties de cadre (21, 21') en forme de U, et des éléments d'enclenchement sont prévus aux extrémités des branches (23, 24 ; 23', 24') des parties de cadre (21, 21') en forme de U.

8. Unité d'approvisionnement selon la revendication 7, **caractérisée en ce qu'**un bras d'enclenchement (35) est prévu à l'extrémité de la branche (24) de la première partie de cadre (21) en forme de U, bras qui dépasse de la face d'extrémité (32) de la branche (24), et un évidement d'enclenchement (36) partant de la face d'extrémité (33) est prévu sur l'autre branche (23), sachant que le bras d'enclenchement (35) et l'évidement d'enclenchement (36) coopèrent respectivement avec un évidement d'enclenchement (36') et un bras d'enclenchement (35') sur les branches (23', 24') de la deuxième partie de cadre (21') en forme de U.

9. Unité d'approvisionnement selon l'une des revendications 1 à 8, **caractérisée en ce que** le cadre auxiliaire (20) peut être assemblé à d'autres cadres auxiliaires au moyen d'une liaison par serrage et possède à cet effet un évidement respectif (27), ouvert vers le bas, en dessous de chacun des bras de serrage (25) faisant saillie vers le haut.

10. Unité d'approvisionnement selon l'une des revendications 2 à 9, **caractérisée en ce que** les éléments d'enclenchement (35, 35' ; 36, 36') et les éléments de serrage (25, 27) sont prévus sur la face extérieure (31) du cadre auxiliaire (20).

11. Unité d'approvisionnement selon l'une des revendications 1 à 10, **caractérisée en ce que** trois paires de rangées de fentes opposées (16, 26) sont respectivement prévues sur le cadre à échelles encliquetables (11) et sur le cadre auxiliaire (20).

12. Unité d'approvisionnement selon la revendication 7, **caractérisée en ce que** les éléments de serrage (25, 27) sur le côté de base (22) sont respectivement disposés entre deux rangées de fentes voisines (26).

13. Unité d'approvisionnement selon l'une des revendications 1 à 12, **caractérisée en ce que** le cadre auxiliaire (20) est constitué de matière plastique et est fabriqué par moulage par injection.
